Europäisches Patentamt

European Patent Office

Office européen des brevets

(19)

(11) Veröffentlichungsnummer: **0 303 646 B1**

(12) **EUROPÄISCHE PATENTSCHRIFT**

(45) Veröffentlichungstag der Patentschrift:
25.09.91 Patentblatt 91/39

(51) Int. Cl.⁵: **G11B 7/08, G11B 7/09**

(21) Anmeldenummer: 88901589.7

(22) Anmeldetag: 10.02.88

(86) Internationale Anmeldenummer:
PCT/EP88/00097

(87) Internationale Veröffentlichungsnummer:
WO 88/06336 25.08.88 Gazette 88/19

(54) **GERÄT ZUR WIEDERGABE VON DATEN.**

Verbunden mit 88101915.2/0279336
(europäische
Anmeldenummer/Veröffentlichungsnummer)
durch Entscheidung vom 16.04.91.

(30) Priorität: 14.02.87 DE 3704718

(43) Veröffentlichungstag der Anmeldung:
22.02.89 Patentblatt 89/08

(45) Bekanntmachung des Hinweises auf die
Patenterteilung:
25.09.91 Patentblatt 91/39

(84) Benannte Vertragsstaaten:
AT BE CH DE ES FR GB IT LI LU NL SE

(56) Entgegenhaltungen:
EP-A- 0 095 766
GB-A- 2 016 744
GB-A- 2 113 947

(56) Entgegenhaltungen:
Patent Abstracts of Japan, Vol. 11, No. 40
(P-544) (2487), 05. Febr. 1987 & JP-A-61208634
Patent Abstracts of Japan, Vol. 11, No. 11
(P-561) (2547) 28. März 1987 & JP-A-61250842
Patent Abstracts of Japan, Vol. 7, No. 196
(P-219) (1341), 26. August 1983 & JP-A-5894139
Electronics and Wireless World, Vol. 91, No.
1594, August 1985, (London, GB), J.R. Watkinson: "Compact disc player circuitry", Seiten
52-55

(73) Patentinhaber: Deutsche Thomson-Brandt
GmbH
Hermann-Schwer-Strasse 3 Postfach 1307
W-7730 Villingen-Schwenningen (DE)

(72) Erfinder: KURZ, Arthur
Ludwigsburgerstrae 26
W-7500 Karlsruhe 41 (DE)
Erfinder: UHDE, Dietmar
Lucian-Reich-Stra e 1a
W-7730 Villingen-Schwenningen (DE)

## Beschreibung

Die Erfindung betrifft ein Gerät zur Wiedergabe und gegebenenfalls auch Aufzeichnung von Daten, die mittels eines optischen Abtastsystems durch führen eines Lichtstrahls entlang den Datenspuren eines sich drehenden plattenförmigen Aufzeichnungsträgers gelesen und anschließend in einem Decodierer decodiert werden, der bei jedem Bitfehler einen Impuls an seinem fehlerausgang abgibt.

Derartige Geräte, z.B. CD-Spieler, magneto-optische Geräte zur Wiedergabe und Aufzeichnung, Aufzeichnungs- und Wiedergabegeräte für Draw-Discs oder Videoplattenspieler, sind mit einem optischen Abtastsystem, bestehend aus einer Laserdiode, mehreren Linsen, einem Prismenstrahlteiler und einem Photodetektor, ausgestattet. Aufbau und funktion eines optischen Abtastsystems, eines sogenannten optical pick-ups, sind in Electronic components & applications, Vol.6, No.4, 1984 auf Seite 209-215 beschrieben.

Der von der Laserdiode ausgesendete Lichtstrahl wird mittels Linsen auf die CD-Platte fokusiert und von dort auf einen Photodetektor reflektiert. Aus dem Ausgangssignal des Photodetektors werden die auf der CD-Platte gespeicherten Daten und der Ist-Wert für den fokus- und für den Spurregelkreis gewonnen. In der genannten Literaturstelle wird der Ist-Wert für den fokusregelkreis als focusing error bezeichnet, während für den Ist-Wert des Spurregelkreises der Ausdruck radial tracking error gewählt ist.

Als Stellglied für den Fokusregelkreis dient eine Spule, über deren Magnetfeld eine Objektivlinse entlang der optischen Achse bewegbar ist. Der Fokusregelkreis bewirkt nun durch Verschieben der Objektivlinse, daß der von der Laserdiode ausgesendete Lichtstrahl stets auf die CD-Platte fokussiert wird. Mittels des Spurregelkreises, der oft auch als Radialantrieb bezeichnet wird, ist das optische Abtastsystem bezüglich der CD-Platte in radialer Richtung verschiebbar. Dadurch kann der Lichtstrahl auf den spiralförmigen Datenspuren der CD-Platte geführt werden.

Bei einigen Geräten ist der Radialantrieb aus einem sogenannten Grob- und einem sogenannten Feinantrieb aufgebaut. Der Grobantrieb ist beispielsweise als Spindel ausgeführt, mittels der das gesamte optische Abtastsystem aus der Laserdiode, den Linsen, dem Prismenstrahlteiler und dem Photodetektor radial verschiebbar ist. Mit dem Feinantrieb ist der Lichtstrahl in radialer Richtung um einen vorgebbaren kleinen Winkel kippbar, so daß der Lichtstrahl allein durch diese Kippbewegung ein kleines Stück entlang einem Radius der CD-Platte fahren kann. Mit anderen Worten ausgedrückt heißt dies, daß mittels des Feinantriebs die bezüglich der CD-Platte radiale Vektorkomponente des Lichtstrahls verändert wird. Dagegen ist der Winkel, unter dem der Lichtstrahl bezüglich der CD-Platte in tangentialer Richtung auf die CD-Platte trifft, fest zu 90° gewählt. Die Vektorkomponente des Lichtstrahls in tangentialer Richtung bezüglich der CD-Platte ist demnach null.

Wie bereits erwähnt, werden die vom Photodetektor gelieferten Datensignale in einem Dekodierer dekodiert, der bei jedem Bitfehler einen Impuls an seinem Fehlerausgang, dem C1F1-Ausgang abgibt.

Die Anzahl der Bitfehler hängt unter anderem auch von dem Winkel ab, unter dem der Lichtstrahl in tangentialer Richtung bezüglich der CD-Platte gesehen auf die CD-Platte trifft. Weil es sich bei einer CD-Platte aber nicht um eine vollkommen ebene kreisförmige, sondern um eine mit Toleranzen behaftete Scheibe handelt, ist der bei der Produktion des CD-Spielers eingestellte in tangentialer Richtung bezüglich der CD-Platte gesehene rechte Winkel des Lichtstrahls nicht für alle Abtastpunkte auf der CD-Platte optimal. Dadurch wird die Anzahl der Bitfehler vergrößert.

Aus der JP-A-61208634 ist es bekannt, bei einem optischen Wiedergabegerät aus der Bitfehlerrate ein Steuersignal zu gewinnen, das die Schleifenverstärkung eines Fokusregelkreises steuert.

In der JP-A-61250842 ist ein optisches Wiedergabegerät beschrieben, bei dem aus der Bitfehlerrate ein Steuersignal erzeugt wird, das einer Positionierungseinrichtung des optischen Abtastsystems zugeführt wird.

Schließlich ist in der GB-A 2016744 ein optisches Abtastsystem erläutert, dessen Lichtstrahl sowohl radial als auch tangential zur Datenspur eines plattenförmigen optischen Aufzeichnungsträgers auslenkbar ist.

Es ist nun Aufgabe der Erfindung, bei einem Gerät zur Wiedergabe von Daten die Bitfehlerrate zu verringern.

Die Erfindung löst diese Aufgabe mit den im Anspruch 1 angegebenen Markmalen.

Es zeigen

Figur 1    ein erstes Ausführungsbeispiel der Erfindung ;
Figur 2    ein zweites Ausführungsbeispiel der Erfindung.

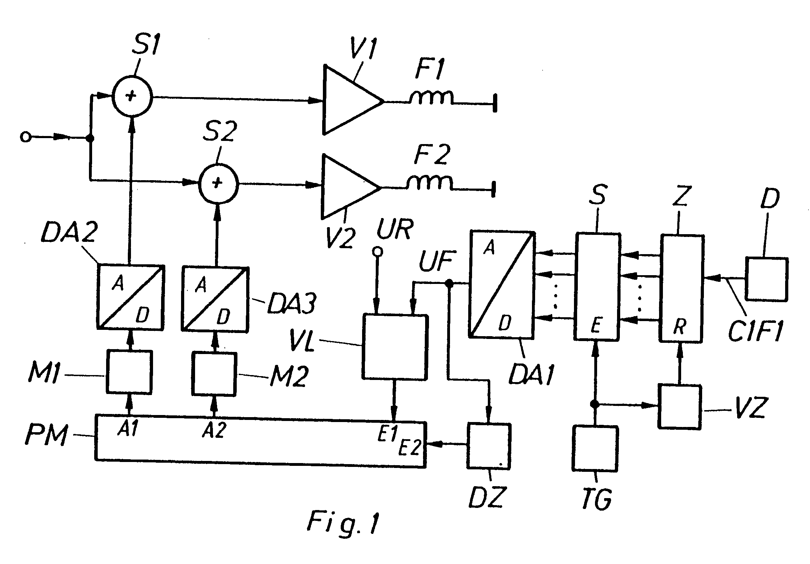

Anhand des in Figur 1 abgebildeten Ausführungsbeipsiels wird dir Erfindung beschrieben und anschließend erläutert.

In Figur 1 ist der sogenannte Fehlerausgang des Decodierers D, der bei jedem Bitfehler einen Impuls abgibt, mit dem Eingang eines Zählers Z verbunden, dessen Ausgänge mit den Eingängen eines Speichers S verbunden sind. Der Ausgang eines Taktgenerators TG ist unmittelbar mit dem Enable-Eingang E des Speichers S und über ein Verzögerungsglied VZ mit dem Rücksetzeingang R des Zählers Z verbunden. Die Ausgänge des Speichers S sind mit den Eingängen eines Digital-Analog-Wandlers DA1 verbunden. Der Ausgang des Digital-Analog-Wandlers DA1 ist mit dem Eingang eines Differenzierers DZ und mit dem ersten Eingang eines Vergleichers VL verbunden, an dessen zweitem Eingang eine Referenzspannung UR liegt. Der Ausgang des Vergleichers VL ist mit dem Eingang E1 und der Ausgang des Differenzierers DZ mit dem Eingang E2 einer Steuerschaltung PM, z.B. eines Mikroprozessors verbunden. Ein Ausgang AI des Mikroprozessors PM ist mit dem Eingang eines Pulsbreitenmodulators M1 verbunden, dessen Ausgang mit dem Eingang eines Digital-Analog-Wandlers DA2 verbunden ist. Ein Ausgang A2 des Mikroprozessors PM ist mit dem Eingang eines Pulsbreitenmodulators M2 verbunden, dessen Ausgang mit dem Eingang eines Digital-Analog-Wandlers DA3 verbunden ist. Der Ausgang des Digital-Analog-Wandlers DA2 ist mit dem ersten Eingang einer Summationsstelle S1 verbunden, deren Ausgang mit dem Eingang eines Verstärkers V1 verbunden ist, während der Ausgang des Digital-Analog-Wandlers DA3 mit dem ersten Eingang einer Summationsstelle S2 verbunden ist, deren Ausgang mit dem Eingang eines Verstärkers V2 verbunden ist. Der Ausgang des Verstärkers V1 ist mit einer Spule F1, der Ausgang des Verstärkers V2 mit einer Spule F2 verbunden. Die beiden Spulen F1 und F2 bilden das Stellglied, mittels dem der Winkel — in weiteren Verlauf als Tangentialwinkel bezeichnet — veränderbar ist, unter dem der Lichtstrahl bezüglich der CD-Platte in tangentialer Richtung gesehen auf die CD-Platte trifft. Weil das Stellglied für den Fokusregelkreis ebenfalls als Spule ausgeführt ist, läßt sich, wie in Figur 1 gezeigt ist, die Spule dis Fokusregelkreises gleichzeitig als Stellglied zur Einstellung des Tangentialwinkels verwenden, wenn die Spule symmetrisch aus zwei Hälften aufgebaut ist ; deshalb wird dem ersten Eingang der Summationsstellen S1 und S2 der Ist-Wert für den Fokusregelkreis, der focusing error, zugeführt.

Es wird nun die Funktion der Erfindung erläutert.

Bei jedem Bitfehler gibt der Decodierer D einen Zählimpuls an den Zähler Z ab, dessen Zählerstand im Anfangszustand null beträgt, so daß mit jedem Bitfehler sein Zählerstand um eins erhöht wird. Der Taktgenerator TG setzt nun den Zähler Z durch einen Impuls am Rücksetzeingang periodisch zurück. Gleichzeitig gibt der Taktgenerator TG aber auch diesen Impuls an den Enable-Eingang des Speichers S, der dadurch seinen Inhalt an den Digital-Analog-Wandler DA1 abgibt, um den Zählerstand des Zählers Z zu übernehmen. Der vom Taktgenerator TG erzeugte Impuls wird dem Enable- Eingang des Speichers S unverzögert, dem Rücksetzeingang R des Zählers Z dagegen infolge des Verzögerungsgliedes VZ verzögert zugeführt, damit der Speicher S den Zählerstand des Zählers Z übernehmen kann, ehe er zurückgesetzt wird. Im Digital-Analog-Wandler DA1 wird jeweils der Zählerstand des Zählers Z, der zur Bitfehlerrate, der Anzahl der Bitfehler in der Zeit zwischen zwei aufeinanderfolgenden Impulsen des Taktgenerators TG, proportional ist, in eine analoge Spannung UF umgewandelt, die deshalb ebenfalls in einem proportionalen Verhältnis zur Bitfehlerrate steht.

Solange die analoge Spannung UF am Ausgang des Digital-Analog-Wandlers DA1, im weiteren Verlauf als Meßspannung bezeichnet, kleiner als die Referenzspannung UR bleibt, wird der Tangentialwinkel nicht verändert. Erst wenn die Bitfehlerrate soweit ansteigt, daß die Meßspannung UF größer wird als die Referenzspannung UR, ändert der Vergleicher VL sein Ausgangssignal, an dem der Mikroprozessor PM nun erkennt, daß die Bitfehlerrate zu groß ist. Jedoch ist an der Meßspannung UF nicht erkennbar, in welche Richtung der Tangentialwinkel geändert werden muß, um die Bitfehlerrate zu senken. Deshalb bewirkt der Mikroprozessor PM über je ein Signal an seinen Ausgängen A1 und A2, daß die Pulsbreitenmodulatoren M1 und M2 impulsförmige Signale abgeben, die durch die Digital-Analog-Wandler DA2 und DA3 gewandelt den Spulen F1 und F2 zugeführt werden. Die Spulen F1 und F2, das Stellglied für den Tangentialwinkel, bewirken nun, daß der Tangentialwinkel zunächst in die eine Richtung verändert wird. Stellt der Differenzierer DZ während eines vorgebbaren Zeitintervalls, z.B. während der folgenden zwei Takte des Taktgenerators TG fest, daß die Bitfehlerrate sinkt, so wird der Tangentialwinkel in der gleichen Richtung weiter verstellt, bis der Vergleicher VL dem Mikroprozessor PM anzeigt, daß die Meßspannung UF unter die Referenzspannung UR gesunken ist.

Stellt der Differenzierer DZ innerhalb des vorgebbaren Zeitintervalls dagegen fest, daß die Bitfehlerrate nicht sinkt, so nimmt der Mikroprozessor PM un, daß er den Tangentialwinkel in die falsche Richtung verstellt hat. Er gibt deshalb an seinen Ausgängen A1 und A2 solange Signale ab, die eine Verstellung des Tangentialwinkels in die andere Richtung bewirken, bis die Meßspannung UF unter die Referenzspannung sinkt.

Durch diese Maßnahmen wird der Tangentialwinkel, der Winkel unter dem der Lichtstrahl in tangentialer Richtung bezüglich der CD-Platte gesehen auf die CD-Platte fällt, stets so verändert, daß die Bitfehlerrate unter einen vorgebbaren Schwellwert sinkt. Unebenheiten auf der CD-Platte verursachen deshalb nicht mehr wie bei einem CD-Spieler, bei dem der Tangentialwinkel fest eingestellt ist, eine wesentliche Erhöhung der Bitfehlerrate. Für den Hörer zeigt sich dieser Erfolg in einer besseren Tonwiedergabe.

Der Vergleicher VL, der Zähler Z, der Speicher S, der Differenzierer DZ und der Digital-Analog-Wandler DA1 können auch im Mikroprozessor PM realisiert sein. Ausserdem bietet der Mikroprozessor PM die Möglichkeit, den Tangentialwinkel solange zu verstellen, bis die Bitfehlerrate ein Minimum annimmt. In diesem Fall dient das Signal am Ausgang des Vergleichers VL nur dazu, die Verstellung des Tangentialwinkels einzuleiten;

der Regelvorgang wird aber nicht bereits beendet, sobald die Meßspannung UF unter die Referenzspannung UR sinkt, sondern erst, wenn der Differenzierer DZ feststellt, daß die Meßspannung UF und damit die Bitfehlerrate ein Minimum annehmend nicht mehr weiter abnimmt. Damit wird eine weitere Verbesserung der Tonwiedergabe erzielt.

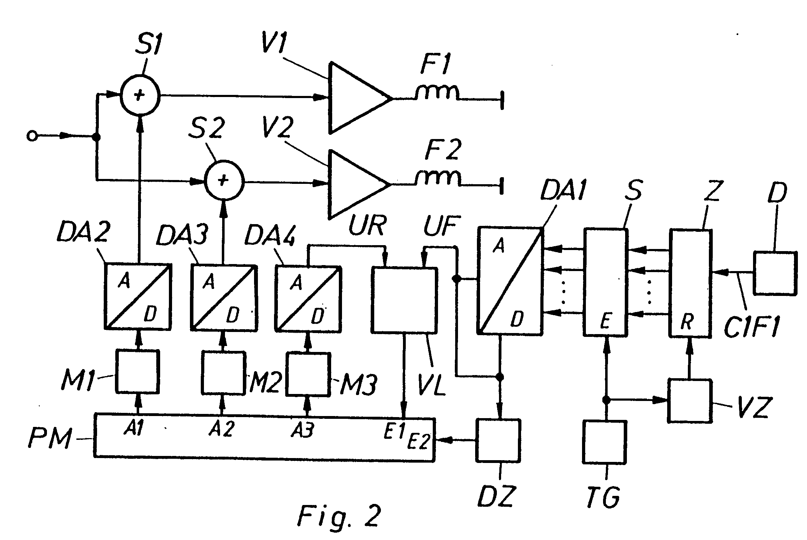

In Figur 2 ist ein weiterers Ausführungsbeispiel gezeigt, das sich von den anderen dadurch unterscheidet, daß ein Ausgang A3 des Mikroprozessors PM mit dem Eingang eines Pulsbreitenmodulators M3 verbunden ist. Dessen Ausgang ist mit dem Eingang eines Digital-Analog-Wandlers DA4 verbunden, an dessen Ausgang die Referenzspannung UR für den zweiten Eingang des Vergleichers VL abnehmbar ist. Das hat den Vorteil, daß die Schwelle, bei welcher mit dem Regeln des Tangentialwinkels begonnen wird, einstellbar ist. Mit anderen Worten ausgedrückt heißt dies, daß die Empfindlichkeit des Regelkreises zur Regelung des Tangentialwinkels eingestellt werden kann.

Die Erfindung ist nicht nur für CD-Spieler und Videoplattenspieler geeignet, sie läßt sich auch bei magneto-optischen Aufzeichnungs- und Wiedergabegeräten verwirklichen, mit denen wie bei einem Tonbandgerät Daten beliebig oft aufgezeichnet, wiedergegeben und gelöscht werden können. Auch Aufzeichnungsund Wiedergabegeräte für Draw-Discs kommen in Frage, die allerdings ähnlich wie ein PROM nur eine einmalige Aufzeichnung von Daten erlauben. Löschen und erneutes Aufzeichnen oder überschreiben der ursprünglichen Daten ist nicht möglich.

## Patentansprüche

1. Gerät zur Wiedergabe und gegebenenfalls auch Aufzeichnung von Daten, die mittels eines optischen Abtastsystems durch Führen eines Lichtstrahls entlang den Datenspuren eines sich drehenden plattenförmigen Aufzeichnungsträgers gelesen und anschließend in einem Dekodierer (D) dekodiert werden, der bei jedem Bitfehler einen Impuls an seinem Fehlerausgang abgibt, wobei aus der Bitfehlerrate ein Steuersignal erzeugt wird, das einer Positionierungseinrichtung des Abtastsystems zugeführt wird und wobei der Lichtstrahl sowohl radial als auch tangential zur Datenspur auslenkbar ist, **dadurch gekennzeichnet**, daß die bezüglich des Aufzeichnungsträgers tangentiale Vektorkomponente des Lichtstrahls mittels eines Steuersignals verändert wird, daß die auf eine Änderung der tangentialen Vektorkomponente erfolgende Änderung der Bitfehlerrate ermittelt wird und daß durch entsprechend der Auswertung der Änderung der Bitfehlerrate weitere Veranderung der tangentialen Vektorkomponente der Einfluß dieser Komponente auf die Bitfehlerrate minimiert wird.

2. Gerät nach Anspruch 1, **dadurch gekennzeichnet**, daß der Fehlerausgang des Dekodierers (D) mit dem Eingang eines Zählers (Z) verbunden ist, der periodisch zurückgesetzt wird und dessen Zählerstand mit einer Referenzgröße (UR) verglichen wird, und daß aus der Auswertung des Vergleichs Signals das Steuersignal erzeugt wird, das einem Stellglied (F1, F2) zugeführt wird.

3. Gerät nach Anspruch 2, **dadurch gekennzeichnet**, daß der Zählerstand des Zählers (Z) in eine analoge Spannung (UF) umgewandelt und mit einer Referenzspannung (UR) in einem Vergleicher (VL) verglichen wird.

4. Gerät nach Anspruch 3, **dadurch gekennzeichnet**, daß der Ausgang des Vergleichers (VL) mit einem Regler (V1, V2) verbunden ist, dessen Ausgang mit dem Stellglied (F1, F2) verbunden ist.

5. Gerät nach Anspruch 4, **dadurch gekennzeichnet**, daß der Regler (V1, V2) mittels des Stellgliedes (F1, F2) solange die tangentiale Vektorkomponente des Lichtstrahls ändert, bis die analoge Spannung (UF) unter die Referenzspannung (UR) sinkt.

6. Gerät nach Anspruch 2, 3, 4 oder 5, **dadurch gekennzeichnet**, daß die Referenzgröße (UR) veränderbar ist.

7. Gerät nach Anspruch 4 oder 5, **dadurch gekennzeichnet**, daß der Fehlerausgang des Decodierers (D) mit dem Zähler (Z) verbunden ist, dessen Ausgänge mit den Eingängen eines Speichers (5) verbunden sind, daß die Ausgänge des Speichers (5) mit den Eingängen eines ersten Digital-Analog-Wandlers (DA1) verbunden sind, daß der Ausgang eines Taktgenerators (TG) unmittelbar mit dem Enable-Eingang (E) des Speichers (5) und über ein Verzögerungsglied (VZ) mit dem Rücksetzeingang (R) des Zählers (Z) verbunden ist, daß der Ausgang des ersten Digital-Analog-Wandlers (DA1) mit dem ersten Eingang eines Vergleichers (VL) und mit dem Eingang eines Differenzierers (DZ) verbunden ist, daß der Ausgang des Vergleichers (VL), an dessen zweitem Eingang die Referenzspannung (UR) liegt, mit dem ersten Eingang (EI) einer Steuerschaltung (PM) verbunden ist, daß der Ausgang des Differenzierers (DZ) mit dem zweiten Eingang (E2) der Steuerschaltung (PM) verbunden ist, daß der erste Ausgang (A1) der Steuerschaltung (PM) mit dem Eingang eines ersten Pulsbreitenmodulators (M1) verbunden ist, dessen Ausgang mit dem Eingang eines zweiten Digital-Analog-Wandlers (DA2) verbunden ist, daß der zweite Ausgang (A2) der Steuerschaltung (MP) mit dem Eingang eines zweiten Pulsbreitenmodulators (M2) verbunden ist, dessen Ausgang mit dem Eingang eines dritten Digital-Analog-Wandlers (DA3) verbunden ist, daß der Ausgang des zweiten Digital-Analog-Wandlers (DA2) mit dem ersten Eingang einer ersten Summationsstelle (S1) verbunden ist, deren Ausgang mit dem Eingang eines ersten Verstärkers (V1) verbunden ist, daß der Ausgang des dritten Digital-Analog-Wandlers (DA3) mit dem ersten Eingang einer zweiten Summationsstelle (S2) verbunden ist, deren Ausgang mit dem Eingang eines zweiten Verstärkers (V2) verbunden ist, und daß die Ausgänge des ersten und des zweiten Verstärkers (V1, V2) mit dem Stellglied (F1, F2) verbunden sind.

8. Gerät nach Anspruch 7, **dadurch gekennzeichnet,** daß der dritte Ausgang (A3) der Steuerschaltung (PM) mit dem Eingang eines dritten Pulsbreitenmodulators (M3) verbunden ist, dessen Ausgang mit dem Eingang eines vierten Digital-Analog-Wandlers (DA4) verbunden ist, und daß der Ausgang des vierten Digital-Analog-Wandlers (DA4) mit dem zweiten Eingang des Vergleichers (VL) verbunden ist.

9. Gerät nach Anspruch 7 oder 8, **dadurch gekennzeichnet,** daß für die Steuerschaltung (PM) ein Mikroprozessor vorgesehen ist.

## Claims

1. Apparatus for the playback and optionally also recording of data which are read by means of an optical scanning system by the passing of a light beam along the data tracks of a rotating disc-shaped record carrier and are then decoded in a decoder (D) which in the case of each bit error supplies a pulse at its error output, in which there is generated from the bit error rate a control signal which is fed to a positioning device of the scanning system and in which the light beam is deflectable both radially and tangentially to the data track, **characterised in that** the light beam vector component tangential with respect to the record carrier is varied by means of a control signal that the change in the bit error rate occurring on a change in the tangential vector component is determined and that, be further variation of the tangential vector component in accordance with the processing of the change in the bit error rate, the influence of this component on the bit error rate is minimized.

2. Apparatus according to claim 1, **characterised in that** the error output of the decoder (D) is connected to the input of a counter (Z) which is reset periodically and whose reading is compared with a reference value (UR), and that there is generated from the processing of the comparison signal the control signal which is fed to an adusting element (F1, F2).

3. Apparatus according to claim 2, **characterised in that** the reading of the counter (Z) is converted into an analog voltage (UF) and compared with a reference voltage (UR) in a comparator (VL).

4. Apparatus according to claim 3, **characterised in that** the output of the comparator (VL) is connected to a controller (V1, V2) whose output is connected to the adjusting element (F1, F2).

5. Apparatus according to claim 4, **characterised in that** the controller (V1, V2) changes the tangential vector component of the light beam by means of the adjusting element (F1, F2) until the analog voltage (UF) falls below the reference voltage (UR).

6. Apparatus according to claim 2, 3, 4 or 5, **characterised in that** the reference value (UR) is variable.

7. Apparatus according to claim 4 or 5, **characterised in that** the error output of the decoder (D) is connected to the counter (Z) whose outputs are connected to the inputs of a store (S), that the outputs of the store (S) are connected to the inputs of a first digital-to-analog converter (DA1), that the output of a clock-pulse generator (TG) is connected directly to the enable input (E) of the store (S) and via a delay means (VZ) to the reset input (R) of the counter (Z), that the output of the first digital-to-analog converter (DA1) is connected to the first input of a comparator (VL) and to the input of a differentiator (DZ), that the output of the comparator (VL) at whose second input the reference voltage (UR) lies is connected to the first input (E1) of a control circuit (PM), that the output of the differentiator (DZ) is connected to the second input (E2) of the control circuit (PM), that the first output (A1) of the control circuit (PM) is connected to the input of a first pulse width modulator (M1) whose output is connected to the input of a second digital-to-analog converter (DA2), that the second output (A2) of the control circuit (MP) is connected to the input of a second pulse width modulator (M2) whose output is connected to the input of a third digital-to-analog converter (DA3), that the output of the second digital-to-analog converter (DA2) is connected to the first input of a first adding stage (S1) whose output is connected to the input of a first amplifier (V1), that the output of the third digital-to-analog converter (DA3) is connected to the first input of a second adding stage (S2) whose output is connected to the input of a second amplifier (V2), and that the outputs of the first and the second amplifier (V1, V2) are connected to the adjusting element (F1, F2).

8. Apparatus according to claim 7, **characterised in that** the third output (A3) of the control circuit (PM) is connected to the input of a third pulse width modulator (M3) whose output is connected to the input of a fourth digital-to-analog converter (DA4), and that the output of the fourth digital-to-analog converter (DA4) is connected to the second input of the comparator (VL).

EP 0 303 646 B1

9. Apparatus according to claim 7 or 8, **characterised in that** a microprocessor is provided for the control circuit (PM).

## Revendications

1. Appareil pour la lecture et, le cas échéant, également l'enregistrement de données qui sont lues au moyen d'un système d'exploration optique en guidant un faisceau lumineux le long des pistes de données d'un support d'enregistrement en forme de disque qui tourne et qui sont ensuite décodées dans un décodeur (D) qui donne une impulsion à sa sortie d'erreurs à chaque erreur de bit, un signal de commande étant produit à partir du taux d'erreurs de bits, signal qui est amené à un dispositif de positionnement du système d'exploration et le faisceau lumineux pouvant être dévié aussi bien dans le sens radial que dans le sens tangentiel par rapport à la piste de données, **caractérisé en ce** que la composante vectorielle du faisceau lumineux tangentielle par rapport au support d'enregistrement varie au moyen d'un signal de commande. que la variation du taux d'erreurs de bits qui suit une variation de la composante vectorielle tangentielle est déterminée et que, par une autre variation de la composante vectorielle tangentielle correspondant à l'exploitation de la variation du taux d'erreurs de bits, l'influence de cette composante sur le taux d'erreurs de bits est minimisée.

2. Appareil selon la revendication 1, **caractérisé en ce** que la sortie d'erreurs du décodeur (D) est reliée à l'entrée d'un compteur (Z) qui est périodiquement remis à l'état initial et dont la position est comparée à une grandeur de référence (UR) et que le signal de commande est produit à partir de l'exploitation du signal de comparaison, signal de commande qui est amené à un composant de réglage (F1, F2).

3. Appareil selon la revendicatoin 2, **caractérisé en ce** que la position du compteur (Z) est transformée en une tension analogique (UF) et qu'elle est comparée dans un comparateur (VL) à une tension de référence (UR).

4. Appareil selon la revendication 3, **caractérisé en ce** que la sortie du comparateur (VL) est reliée à un régulateur (V1, V2) dont la sortie est reliée au composant de réglage (F1, F2).

5. Appareil selon la revendication 4, **caractérisé en ce** que le régulateur (V1, V2) modifie la composante vectorielle tangentielle du faisceau lumineux à l'aide du composant de réglage (F1, F2) jusqu'à ce que la tension analogique (UF) tombe au-dessous de la tension de référence (UR).

6. Appareil selon la revendication 2. 3, 4 ou 5, **caractérisé en ce** que la grandeur de référence (UR) peut être variée.

7. Appareil selon la revendication 4 ou 5, **caractérisé en ce** que la sortie d'erreurs du décodeur est reliée au compteur (Z) dont les sorties sont reliées aux entrées d'une mémoire (S), que les sorties de la mémoire (S) sont reliées aux entrées d'un premier convertisseur numérique-analogique (DA1), que la sortie d'un générateur de rythme (TG) est reliée directement à l'entrée de validation (E) de la mémoire et à l'entrée de remise à l'état initial (R) du compteur (Z) par un élément de retard (VZ), que la sortie du premier convertisseur numérique-analogique (DA1) est reliée à la première entrée d'un comparateur (VL) et à l'entrée d'un différénciateur (DZ), que la sortie du comparateur (VL), à la seconde entrée duquel est appliquée la tension de référence (UR), est reliée à la première entrée (E1) d'un montage de commande (PM), que la sortie du différenciateur (DZ) est reliée à la seconde entrée (E2) du montage de commande (PM), que la première sortie (AI) du montage de commande (PM) est reliée à l'entrée d'un premier modulateur d'impulsions en durée (M1) dont la sortie est reliée à l'entrée d'un second convertisseur numérique-analogique (DA2), que la seconde sortie (A2) du montage de commande (MP) est reliée à l'entrée d'un second modulateur d'impulsions en durée (M2) dont la sortie est reliée à l'entrée d'un troisième convertisseur numérique-analogique (DA3), que la sortie du second convertisseur numérique-analogique (DA2) est reliée à la première entrée d'un premier totalisateur (S1) dont la sortie est reliée à l'entrée d'un premier amplificateur (V1), que la sortie du troisième convertisseur numérique-analogique (DA3) est reliée à la première entrée d'un second totalisateur (S2) dont la sortie est reliée à l'entrée d'un second amplificateur (V2) et que les sorties du premier et du second amplificateur (V1, V2) sont reliées au composant de réglage (F1, F2).

8. Appareil selon la revendication 7, **caractérisé en ce** que la troisième sortie (A3) du montage de commande (PM) est reliée à l'entrée d'un troisième modulateur d'impulsions en durée (M3) dont la sortie est reliée à l'entrée d'un quatrième convertisseur numérique-analogique (DA4) et que la sortie du quatrième convertisseur numérique-analogique (DA1) est reliée à la seconde entrée du comparateur (V1).

9. Appareil selon la revendication 7 ou 8, **caractérisé en ce** qu'un microprocesseur est prévu pour le montage de commande (PM).

6

Fig.1

Fig. 2